# EUROPEAN PATENT APPLICATION

(11) **EP 2 472 131 A2**
(43) Date of publication of application: **04.07.2012**
(21) Application number: 11194702.4
(22) Date of filing: 20.12.2011
(51) Int. Cl.: F16B 12/20, B27G 13/02

(54) **Fastening device and tightening tool**

(30) Priority: 22.12.2010 GB 201021946
(71) Applicant: Lawrie-Fussey, Thomas William, Haverhill, Suffolk CB9 7LF (GB)
(72) Inventor: Lawrie-Fussey, Thomas William, Haverhill, Suffolk CB9 7LF (GB)
(74) Representative: Hocking, Adrian Niall

(57) **Abstract**

A fastening device is provided for fastening two parts together. The two parts for fastening together can be furniture parts. The fastening device may have two rotatable engagement slots for engaging with two dowels which are fixed to the parts being fastened together. The engagement slots have cam profiles such that when they are rotated by a user, the dowels, and thus the parts, are pulled together, and thereby fastened. The fastening device may have a gear mechanism that multiplies torque input to the fastening device by the user so as to provide greater rotational torque for fastening at the engagement slots. The invention also provides a tightening tool that may be used to provide an input torque to the fastening device. The tightening tool remains rigid below a threshold torque, but reversibly buckles when the threshold torque is exceeded. The invention also provides a ratchet for switching between a tightening mode and a loosening mode of the tightening tool.

## Description

The present invention relates to a fastening device that may be used to connect two or more parts of a piece of furniture together. The present invention also relates to a tightening tool that may be used to tighten a tightenable element. The tightenable element may be a part of the fastening device. The present invention also relates to a combination of the fastening device and the tightening tool for use with the fastening device.

Non-permanent fastening devices are used to connect two parts of a piece of furniture together. For example, a fastening device may be used to connect adjacent shelf units together, or to connect a table top to a table leg. A conventional fastening device is commonly used with flat-pack furniture, for example where there is a 90 degree join between neighbouring elements that are to be clamped together with no externally visible fixing. Such conventional fastening devices are usually used in the construction of wooden furniture pieces.

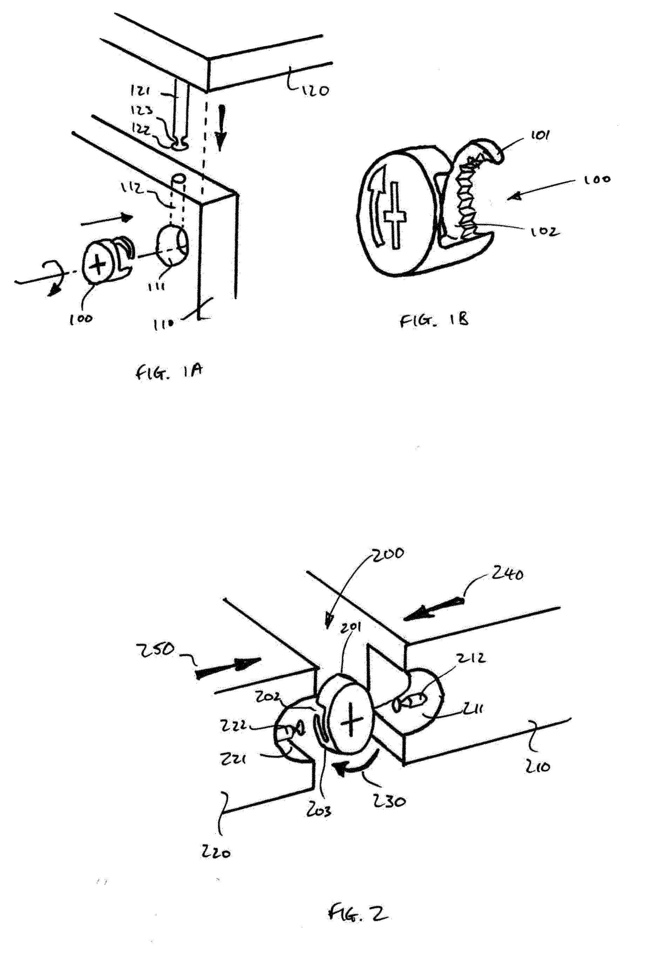

A conventional fastening device is shown in Figs 1A and 1B. As can be seen in Fig. 1B, the conventional fastening device 100 comprises a metallic disc that is inserted into a void 111 in one of the two parts 110 to be joined together. The other part 120 has a dowel 121 extending from it. In order to join the two parts together, the dowel 121 extends into a hole 112 in the part 110 containing the void 111 such that a head 122 and neck 123 portion of the dowel 121 protrude into the void, as shown in Fig. 1A.

As shown in Fig. 1B, the conventional fastening device 100 has a claw 101 extending partially circumferentially around the fastening device 100. The claw 101 has a cam profile 102 such that its thickness (in a radial direction) gradually increases from the tip of the claw 101.

In use, the claw 101 slips around the neck portion of the dowel 121. The conventional fastening device 100 can then be rotated (for example using a screwdriver) such that the cam profile 102 of the claw 101 pulls the dowel 121 further into the piece of furniture to which it is being joined, thereby fastening the two furniture parts 110, 120 together.

When tightened, the only element of the conventional design that is loaded is the compression of the cam profile 102 between the dowel head 122 in the inner face of the void 111. The conventional device 100 is not designed to maintain high levels of load; indeed it is not typically used in a major load-path. More commonly bracing members of a desk or shelving system tend to provide most of the support needed, with the conventional fastening device 100 and dowel 121 arrangement used for finer adjustment/location and hence they only provide recessed pinching forces. Such a conventional device 100 is typically rotated using a screwdriver to generate sufficient tightening torque.

An aspect of the present invention provides an improved fastening device. The fastening device of the present invention may be used to mate, or fasten (for example non-permanently fasten) neighbouring shelf units, neighbouring parts of furniture, or other adjacent parts. Where the term "fastening device" is used herein, it will be understood that this may mean "non-permanent fastening device".

According to an aspect of the invention, there is provided a fastening device for fastening a first body having a first fixing element to a second body having a second fixing element, the fastening device comprising a rotatable body having formed therein a first engagement slot configured to engage with said first fixing element and a second engagement slot configured to engage with said second fixing element. The first engagement slot and the second engagement slot may be shaped such that as the rotatable body is rotated, said first fixing element and said second fixing element are pulled towards each other, thereby fastening said first body to said second body.

According to this aspect of the invention, two bodies that each have fastening elements can be fastened (for example non-permanently fastened) together by engagement of a respective slot in the fastening device with the fastening elements. The first and second engagement slots can be configured to engage with any appropriate fastening elements, such as dowels. This may provide an increased clamping force for clamping the two bodies together. It may also allow the possibility of clamping together two bodies that are placed side-by-side and/or in the same orientation as each other.

In the fastening device described above, the thickness of the wall of the rotatable body in which the first and second engagement slots are formed may increase along at least a part of the length of each slot in the direction in which the slots are configured to rotate. This may act to pull said first fixing element and said second fixing element towards each other as the rotatable body is rotated.

For example, the slots may be arranged to form a cam surface with which, in use, a part of the respective fixing element engages. This is an efficient way of transferring rotational movement of the rotatable body (and thus the engagement slots) to linear motion of the fixing elements, which may be towards each other.

The first fixing element and the second fixing element may be a first dowel and a second dowel respectively, each dowel having a head portion and a neck portion that is narrower than the head portion. The first and second engagement slots may be configured to receive the neck portion of the first and second dowels respectively.

Arranging the first and second engagement slots to receive dowels ensures that there is a good, stable contact between the fixing elements and the engagement slots. Such an arrangement is also relatively inexpensive.

According to another aspect of the invention, there is provided a fastening device for fastening a first body having a first fixing element to a second body. The fastening device may comprise a rotatable input shaft. The fastening device may also comprise a primary rotatable engagement body having a primary engagement slot configured to engage with said first fixing element, the primary engagement slot being formed in a wall of the primary rotatable engagement body such that the primary engagement slot rotates with the primary rotatable engagement body. The fastening device may also comprise a gear mechanism configured to transfer rotation from the rotatable input shaft to the primary rotatable engagement body such that the rotation rate of the primary rotatable engagement body is lower than the rotation rate of the rotatable input shaft. The primary engagement slot may be shaped so as to pull the first fixing element (and thus the first body) in a linear direction as the primary engagement slot rotates. The linear motion of the first fixing element may be towards the second body thereby fastening the first body to the second body.

This aspect of the invention allows an increased clamping force to be provided. This can be particularly advantageous when fastening together edge surface of two thin bodies placed side-by-side, but is useful whenever an increased clamping force (for example a clamping force that is higher than that which can readily be provided by a conventional fastening) is required. Whenever an increased clamping force is required, a larger force (for example at least in part due to rotational frictional force) must be overcome, and hence an increased torque input is required (this may be analogous to the bolt-formula which describes a linear relationship between bolt tension and input torque). The aspect of the invention described above incorporates a gearing mechanism into the fastening device, thereby enabling an operator to more easily generate the increased turning force needed to generate the increased clamping force at the engagement slot.

As will be evident from the examples given herein, the gearing mechanism need not require any components in addition to the input shaft and the engagement body. The gearing mechanism may by formed directly by interaction between the input shaft and the engagement body. Alternatively, additional gear components may be used to transfer the rotation of the input shaft to rotation of the engagement body.

According to the invention, the thickness of the wall of the primary rotatable engagement body in which the primary engagement slot is formed may increase along at least a part of the length of the slot in the direction in which the slot is configured to rotate, so as to pull said first fixing element towards the second body as it rotates.

Thus, the walls either side of the slot (i.e. the walls that form the slot) may be said to have a cam profile, for example in the thickness direction. This arrangement may be an efficient way of transferring rotational movement of the primary rotatable body (and thus the slot) to linear motion of the first fixing element, for example linear motion towards the second body.

The fastening device according to the present invention may further comprise a housing arranged to locate the fastening device in a recess. The recess may be formed in the first body, or the recess may be formed in the second body, or the recess may be formed in part by the first body and in part by the second body.

According to the invention, the slot may follow an arcuate path when viewed in the direction of the axis about which it is configured to rotate. This means that the fixing element may always engage with the slot in the same position relative to the fixing device (even though the part of the slot with which the fixing element engages may change as the slot rotates).

According to the invention, the slot may be configured to receive the neck portion of an elongate fixing element that has a head portion at its distal end and a neck portion that is narrower than the head portion. As such, when the fixing element is received in the slot, the head portion may extend on the opposite side of the slot to the rest of the fixing element. Thus, the fixing element may be a dowel, for example a conventional dowel with a circumferential (i.e. annular) notch to form a neck portion. Arranging the slot to receive a dowel as the fixing element may be one way to ensure a secure engagement between the engagement slot and the fixing element, thereby providing a secure and efficient transfer of force between the engagement slot and the fixing element.

According to the invention, the fixing device may further comprise a further engagement slot. The further engagement slot may have substantially the same form as said primary engagement slot. The further engagement slot may be configured to engage with a second fixing element on said second body in substantially the same way that the primary engagement slot engages with the first fixing element. As such, any of the features described herein in relation to the first engagement slot, including (but not limited to) its construction, shape, arrangement, how it interacts with the rest of the fixing device, and how it interacts and/or engages with its respective fixing element may also apply in relation to the second engagement slot (and how it interacts and/or engages with its respective fixing element).

Providing a further engagement slot may provide still further clamping force for holding the two bodies (which may be pieces of furniture) together. Additionally or alternatively, it may provide the same clamping force as an embodiment with a single engagement slot, but the force may be distributed over the two slots, thereby reducing the stress imparted on an individual slot. This may mean that, for example, tolerances and/or material requirements can be relaxed.

According to the invention, the further engagement slot (if present) may be shaped so as to move the second fixing element (and thus the second body) in a linear direction as the further engagement slot rotates. The linear motion of the second fixing element may be so as to pull the second fixing element towards the first body. The linear motion of the second fixing element may be in the opposite direction to the linear motion of the first fixing element.

According to the invention, the further engagement slot may be formed in the primary rotatable engagement body. This may result in a particularly simple and effective mechanism, because the number of moving parts can be kept low.

According to the invention, the axis about which the rotatable input shaft rotates may be parallel to the axis about which the primary rotatable engagement body rotates. This may result in efficient transfer of torque between the input shaft and the primary rotatable engagement body, for example because the direction of the torque does not have to be changed. Additionally or alternatively, such an arrangement may be particularly straightforward and inexpensive to implement, for example because only gears with straight-cut teeth may be required.

According to the invention, the axis about which the rotatable input shaft rotates may be collinear with the axis about which the primary rotatable engagement body rotates. This may result in a still further efficient transfer of torque torque between the input shaft and the primary rotatable engagement body and/or an inexpensive mechanism.

According to the invention, the gear mechanism may be an epicyclic gear mechanism. The fastening device may further comprise a housing arranged to locate the fastening device into a recess which may be formed in the first body and the second body and to fix the housing in position relative to the first body and the second body. The rotatable input shaft may be rotatably mounted on the primary rotatable engagement body and may take the form a sun gear having teeth on an outer cylindrical surface. At least one planet gear may also be rotatably mounted on the primary rotatable engagement body such that its teeth engage with the teeth of the rotatable input shaft. The housing may form a fixed ring (or annulus) gear having teeth on an inner cylindrical surface configured to engage with the teeth of the planet gear. According to this arrangement, when the input shaft is rotated, the axis of the planet gear (or gears) rotate(s) about the axis of the input shaft, thereby causing the primary rotatable engagement body to rotate about its axis. More than one planet gear may be provided. For example, two, three, four, five, or more than five planet gears may be provided.

Using such an epicyclic gear mechanism may be an efficient way of reducing the rotation rate between the input shaft and the primary rotatable engagement body. The overall gear ratio between the input shaft and the primary rotatable engagement body can be easily set to the desired value by changing the size (i.e. radius) of (and/or number of teeth on) one or more of the input shaft, the planet gear(s) and the ring gear.

According to the invention, the gear mechanism may be a harmonic drive gear mechanism. The fastening device may further comprise a housing arranged to locate the fastening device into a recess which may be formed in the first body and the second body and to fix the housing in position relative to the first body and the second body. The housing may form a fixed circular spline having teeth on an inner cylindrical surface. The primary rotatable engagement body may comprise a flexible spline having teeth formed on an outer cylindrical surface to form a flex-spline configured to engage with the circular spline formed by the housing. The rotatable input shaft may be rotatably mounted on the primary rotatable engagement body and may take the form a bar-type wave-generator configured to act on an inner cylindrical surface of the flex-spline formed by the primary rotatable engagement body. In this arrangement, when the input shaft is rotated, the flex spline and thus the primary rotatable engagement body rotate in the opposite direction to the input shaft. The number of teeth on flex spline may be fewer than the number of teeth on the circular spline.

A harmonic drive gear mechanism may only require two elements with teeth: the circular spline and the flexible spline. As such, the gear mechanism can be relatively uncomplicated and relatively efficient, with as few as two meshing parts. The overall gear ratio between the bar-type wave-generator and the primary rotatable engagement body can be easily set to the desired value by appropriate selection of the number of teeth on the circular spline and flexible spline.

According to the invention, at least a portion of the primary engagement slot and, where present, at least a portion of the secondary engagement slot may extend in the direction of the axis of rotation of the primary rotatable engagement body. In this way, as the respective engagement slot rotates about its axis, the fastening device moves in the direction of the axis of rotation of the primary rotatable engagement body. This provides the advantage that as the engagement slot(s) rotate (and thus the fixing element is pulled into the fastening device), the primary rotatable engagement body (along with connected parts of the fastening device) can be pulled into a recess in which the fastening device sits. This can provide a visual indication of whether or not the fastening device has been tightened.

According to embodiments of the invention that have a further engagement slot, the fastening device may further comprise a further rotatable engagement body. The further engagement slot may be formed in the further rotatable engagement body. Such an arrangement may provide the advantage of spreading the load required to fasten the two bodies together over two separate engagement bodies. This may result in lower tolerances and/or material requirements for the engagement bodies.

According to the invention, the primary rotatable engagement body and the further rotatable engagement body may be configured to rotate about parallel axes. The rotatable input shaft may be configured to rotate about an axis that is perpendicular to the axes about with the primary rotatable engagement body and the further rotatable engagement body are configured to rotate. Such an arrangement may allow the fastening device to have a compact structure. For example, it may allow the depth of the fastening device in the direction of the axis of the rotatable input shaft to be small.

According to the invention, the gear mechanism may be a worm drive gear mechanism. The rotatable input shaft may have a screw thread on an outer cylindrical surface to form a worm. The primary rotatable engagement body and the further rotatable engagement body may both comprise a cylindrical outer surface provided with teeth configured to engage with the teeth of the worm. Thus, the primary rotatable engagement body and the further rotatable engagement body may form a pair of worm wheels. The primary and further engagement slots may be formed on portions of the cylindrical outer surfaces of the primary and further rotatable engagement bodies respectively at different circumferential positions to the teeth.

Using a worm drive gear mechanism allows the direction of rotation to be switched through 90 degrees between the input shaft and the primary and further rotatable engagement bodies in an efficient manner. It also enables a compact structure, for example because the primary and further rotatable engagement bodies can also act as the worm wheels. As such, no extra gear components are required in addition to the input shaft (which forms the worm) and the primary and further rotatable engagement bodies (which form the worm wheels). Although described in relation to an embodiment that has a further rotatable engagement body, the worm drive gear mechanism may also be implemented with a single rotatable engagement body, and thus a single worm wheel.

A further advantage of the worm drive gear mechanism is that it can act as a one-way gear mechanism that cannot be undone (for example unintentionally). For example, the worm wheels may only be rotated in one direction.

According to the invention, the gear mechanism may be a differential drive gear mechanism. The rotatable input shaft may have teeth formed on an outer cylindrical surface thereof to form a drive gear. The fastening device may further comprise a ring gear configured to engage with the teeth of the input shaft and to rotate about an axis that is perpendicular to the axis of rotation of the input shaft. The fastening device may further comprise a differential carrier to which the ring gear is rigidly connected. The fastening device may further comprise a differential planet gear rotatably mounted on the differential carrier. The fastening device may further comprise a first output gear configured to engage with, and be driven by, the differential planet gear, the primary rotatable engagement body being configured to rotate with the first output gear. The fastening device may further comprise a second output gear configured to engage with, and be driven by, of the differential planet gear, the further rotatable engagement body being configured to rotate with the second output gear.

Using a differential drive gear mechanism may be advantageous in spreading the tightening load between the primary rotatable engagement body and the further rotatable engagement body.

According to the invention, a fastening device that uses either a worm drive gear mechanism or a differential drive gear mechanism may further comprise a housing arranged to locate the fastening device into a recess which may be formed in the first body and the second body and to fix the housing in position relative to the first body and the second body. The housing may comprise a first cutout portion configured to allow the first fixing element to pass through the housing to engage with the primary engagement slot and a second cutout portion configured to allow the second fixing element to pass through the housing to engage with the further engagement slot.

Any one or more of the parts of the fastening device (for example any one or more of the parts of the gear mechanism) may be mounted on or to the housing, either directly or indirectly.

According to another aspect of the invention, there is provided a tightening tool for providing a torque to a tightenable element. The tightening tool may comprise a head portion for engaging with the tightenable element. The tightening tool may comprise a torque input portion configured to allow an input torque to be applied to the tightening tool. The tightening tool may comprise a first arm (which may be an elongate element) extending between the head portion and the torque input portion. The tightening tool may comprise a second arm (which may be an elongate element) extending between the head portion and the torque input portion. The first arm and the second arm may be constructed and arranged such that, when the tightening tool is used for providing a tightening torque to the tightenable element, the first arm portion remains substantially rigid when the input torque is below a predetermined value, and undergoes significant flexing (which may be referred to as buckling) when the input torque exceeds said predetermined value. The significant flexing is preferably non-permanent (for example elastic), such that the first arm returns to its undeformed, original, shape when the input torque is reduce back below the predetermined value.

The tightening tool according to this aspect of the present invention therefore provides feedback to the user when the desired tightening torque has been reached. This feedback may be, for example, visual (for example through flexing of the first arm) and/or tactile (for example as the user feels the flexing of the first arm) and/or audible (for example as the user hears an audible 'click'). This feedback may be useful in preventing overtightening of the tightenable element, for example because it is difficult to apply greater torque once the first arm undergoes significant flexing and/or because the user knows that once the first arm flexes, the required torque has been achieved and thus does not try to apply greater torque. The tightening tool of the present invention may be particularly useful to apply an input torque to the input shaft of the fastening device of the present invention. In that case, the maximum input torque (i.e. the torque at which the first arm flexes) could be set at a level that prevents over tightening of the fastening device.

According to the invention, the first arm portion may remain substantially rigid when the input tightening torque is below a predetermined value, and may undergo significant flexing when the input tightening torque exceeds said predetermined value.

According to the invention, the first arm may be configured to buckle at a predetermined position along its length when said input torque exceeds said predetermined value, thereby undergoing said significant flexing. This means that the first arm could be configured to buckle in a predictable and repeatable manner every time the input torque exceeds said predetermined value, thereby providing reliable feedback to the user.

According to the invention, said first arm and said second arm may be made from the same material, and said significant flexing of said first arm may be caused by the relative construction of the first arm and the second arm. This may assist in the production of the tightening tool. For example, the first and second arms could be manufactured as the same part, and optionally also as the same part as the head portion and/or the torque input portion.

According to the invention, said first arm and said second arm may be made from the same material, and said significant flexing of said first arm may be caused by the relative geometry of the first arm and the second arm. According to the invention, said first arm may have a thin wall portion at a position along its length, such that the first arm is configured to buckle at the thin wall portion (which may, for example, be a notch) when said input torque exceeds said predetermined value. These arrangements may be an effective way of ensuring that the flexing of the first arm portion is reliable and repeatable.

According to the invention, said first arm may be a curved elongate element, with the centre of curvature being on the side of the first arm that is in the direction of movement of the first arm when the tightening tool is used to provide a tightening torque to the tightenable element. Such an arrangement may be effective in ensuring that the first arm flexes when a tightening torque exceeds a predetermined value, but not necessarily when applying a loosening torque. Said second arm may also be a curved elongate element, with the centre of curvature being on the side of the second arm that is in the direction of movement of the second arm when the tightening tool is used to provide a tightening torque to the tightenable element.

According to the invention, said first arm and said second arm may be elongate elements that are joined together by the head portion at one end. Said first arm and said second arm may be joined together by the torque input portion at the other end. This may be advantageous in terms of ease of manufacture and overall structural rigidity of the tightening tool.

According to the invention, said first arm and said second arm may be constructed and arranged such that when the tightening tool is used for providing a loosening torque to the tightenable element, the first arm and the second arm remain substantially rigid regardless of the loosening input torque. This arrangement allows the user to use the tightening tool to loosen a tightenable element regardless of how tightly it has been tightened.

Said first arm may be integral to (for example formed with and/or permanently fixed with) the rest of the tightening tool. Alternatively, the first arm may be separable from the rest of the tool, and removably attached to the main tool such that said first arm may be interchanged with alternative first arms having, for example, different materials and/or geometries, such that the buckling load can be altered for different applications.

Thus, the first arm may be configured to be removable from the rest of the tightening tool.

The first arm may be a baseline first arm configured to be removable from the rest of the tightening tool and replaceable with a replacement first arm that is configured to undergo significant flexing when the input torque exceeds a different predetermined value to the predetermined value at which the baseline first arm is configured to undergo significant flexing.

According to an aspect of the invention, there is provided a kit of parts comprising a tightening tool as described above and elsewhere herein, wherein the first arm is a baseline first arm configured to be removable from the rest of the tightening tool, the kit of parts further comprising at least one further first arm configured to replace the baseline first arm in the tightening tool. The or each further first arm may be configured to undergo significant flexing when the input torque exceeds a different predetermined value to the predetermined value at which the other (or at least one of the other) first arm or arms in the kit of parts is/are configured to undergo significant flexing.

According to the invention, the tightening tool may further comprise a keyed element on the head portion configured to engage with a corresponding keyed portion on said tightenable element, so as to allow torque to be transferred from the tightening tool to the tightenable element. The keyed element on the head portion may either be a male or female keyed element, configured to engage with a corresponding female or male keyed portion on said tightenable element respectively. Providing suitable corresponding keyed portions/elements can assist in efficient torque transfer between the tightening tool and the tightenable element, and may also make the tightening tool easy to use.

According to the invention, said keyed element may be a non-standard keyed element. This non-standard keyed element may cooperate with a corresponding non-standard keyed element on a tightenable element, for example a non-standard keyed element on the input shaft of a fastening device according to the present invention. This may be advantageous in preventing a standard tightening tool (such as a screwdriver) being inappropriately used with a tightenable element, thereby preventing excessive torque being applied to the tightenable element.

According to the invention, said head portion may comprise a ratchet configured to allow only a tightening force or only a loosening force to be transmitted from the tightening tool to said tightenable element when the ratchet is in a particular configuration.

According to the invention, said head portion may comprise a ratchet configured to be switchable between a first mode and a second mode. In the first mode the ratchet allows a tightening torque to be transmitted from the tightening tool to said tightenable element, but prevents a loosening torque from being transmitted from the tightening tool to said tightenable element. In the second mode the ratchet allows a loosening torque to be transmitted from the tightening tool to said tightenable element, but prevents a tightening torque from being transmitted from the tightening tool to said tightenable element.

According to this feature, the user is able to select whether the tightening tool is to be used to tighten or loosen a tightenable element.

According to the invention, said ratchet may comprise: a toothed ratchet cog; and a pawl. The pawl may comprise a pointer that is configured to engage with the teeth of the toothed ratchet cog to thereby transfer torque to the toothed ratchet cog. This may be an efficient and practical manner in which to provide a ratchet.

According to the invention, said pawl may further comprise a slider and a flexible arm, said flexible arm being arranged to join said pointer to said slider. Said head portion may comprise a recess within which the pawl is located, and a guide rail on which the slider can run. Said slider may be configured to be located, in use, either at a first end of the guide rail or a second end of the guide rail. The pawl may be configured such that, when the slider is located at the first end of the guide rail, the flexible arm is configured to abut a first side wall of the recess such that the pawl is not able to flex when the tightening tool is rotated in a tightening direction, but is able to flex when the tightening tool is rotated in a loosening direction, and when the slider is located at the second end of the guide rail, the flexible arm is configured to abut a second side wall of the recess such that the pawl is not able to flex when the tightening tool is rotated in a loosening direction, but is able to flex when the tightening tool is rotated in a tightening direction.

This particular arrangement provides the advantage of an effective and reliable ratchet. The ratchet is simple to construct, and has minimal moving parts. The user can readily switch between the tightening and loosening functions by sliding the slider from a first position (which may be at one end of the guide rail) to a second position (which may be at the other end of the guide rail).

The ratchet arrangement described herein may be used with any of the tightening tools described herein. The ratchet arrangement may be used independently of the tightening tools described herein. For example, a ratchet according to the present invention may be used in any suitable application where a ratchet is advantageous.

According to an aspect of the invention, there is provided a ratchet, which may be for use with a tightening tool. The ratchet may comprise a toothed ratchet cog. The ratchet may comprise a pawl. The pawl may comprise a pointer that is configured to engage with the teeth of the toothed ratchet cog to thereby transfer torque to the toothed ratchet cog. The ratchet may comprise a head portion comprising a recess within which the pawl is located. The pawl may further comprise a slider and a flexible arm, said flexible arm being arranged to join said pointer to said slider. The head portion may further comprise a guide rail on which the slider can run. The slider may be configured to be located, in use, either at a first end of the guide rail or a second end of the guide rail. The ratchet may be configured such that when the slider is located at the first end of the guide rail, the flexible arm is configured to abut a first side wall of the recess such that the pawl is not able to flex when the tightening tool is rotated in a tightening direction, but is able to flex when the tightening tool is rotated in a loosening direction. The ratchet may be configured such that when the slider is located at the second end of the guide rail, the flexible arm is configured to abut a second side wall of the recess such that the pawl is not able to flex when the tightening tool is rotated in a loosening direction, but is able to flex when the tightening tool is rotated in a tightening direction.

The ratchet is simple to construct, and has minimal moving parts, providing an effective and reliable ratchet. The user can readily switch between the tightening and loosening functions by sliding the slider from a first position (which may be at one end of the guide rail) to a second position (which may be at the other end of the guide rail).

Any of the tightening tools described herein may be configured for use with any of the fastening devices described herein. For example, any of the tightening tools described herein may be configured to provide an input torque to the rotatable input shaft of any of the fastening devices described herein.

The invention will more clearly be understood from the following description, given by way of example only, with reference to the accompanying drawings, in which:
Fig. 1A shows a perspective view of a conventional fastening device being used to fasten two bodies together;
Fig. 1B shows a perspective view of a conventional fastening device in greater detail;
Fig. 2 shows a perspective view of a fastening device according to the present invention being used to fasten two bodies together;
Fig. 3 shows, in detail, a fastening device according to an embodiment of the invention;
Fig. 4 shows, in detail, a fastening device according to an embodiment of the invention;
Fig. 5 shows, in detail, a fastening device according to an embodiment of the invention;
Fig. 6 shows, in detail, a fastening device according to an embodiment of the invention;
Fig. 7A shows a perspective view of an engagement slot and locating slot of a fastening device according to an embodiment of the invention;
Fig. 7B shows a side view of an engagement slot and locating slot of a fastening device according to an embodiment of the invention;
Fig. 8A shows a perspective view of a tightening tool according to the present invention;
Fig. 8B shows a schematic view of the tightening tool shown in Fig. 8A being used in a tightening mode;
Fig. 8C shows a schematic view of the tightening tool shown in Fig. 8A being used in a loosening mode;
Fig. 9 shows a ratchet arrangement according to the present invention;
Fig. 10 shows a close-up view of a ratchet arrangement according to the present invention;
Fig. 11 shows a housing for use with a ratchet according to the present invention; and
Fig. 12 shows a pawl for use with a ratchet according to the present invention.
Fig. 13 shows a schematic of a tightening tool according to the present invention having an interchangeable first arm.

The conventional fastening device 100 shown in Fig. 1A and Fig. 1B operates so as to non-permanently fasten one part 120, which has a dowel 121 protruding therefrom, to another part 110 which has a void 111 for receiving the fastening device 100 and the dowel 121. The operation of this conventional device is discussed in the introductory portion above.

In the conventional arrangement shown in Figs. 1A and 1B, the fastening device 100 only engages with a single dowel attached to one of the parts being fastened. Thus, the amount of load that the conventional fastening element can support is limited. Furthermore, a large tightening torque must be input to the fastening device 100 in order to generate any significant clamping force in the conventional arrangement.

Fig. 2 shows a tightening element 200 according to an embodiment of the present invention. As shown in the figure, the tightening element 200 is configured to clamp together two adjacent parts (or bodies) 210, 220 by engaging with both a dowel (or fixing element) 212 located on the first part 210 and a dowel (or fixing element) 222 located on the second part 220.

The tightening element 200 of Fig. 2 has two engagement slots 201 (not visible in the figure) and 202 (shown). The first engagement slot 201 engages with the first dowel 212 and second engagement slot 202 engages with the second dowel 222 in operation. Both of the engagement slots 201, 202 have a cam profile 203 on their sidewalls (i.e the sidewalls get thicker in the direction of tightening of the tightening element 200). This cam profile may be similar to or the same as the cam profile 102 described herein in relation to the convention tightening element 100 shown in Fig. 1B.

In operation, the tightening element 200 is located in a void formed by the cutouts 211, 221 formed in the parts 210, 220. In use, the tightening element 200 is rotated by a user in the direction of arrow 230. As a result, the first engagement slot 201 rotates relative to the first dowel 212, and the second engagement slot 202 rotates relative to the second dowel 222. Because of the cam profile of the sidewalls of the engagement slots, this rotation pulls the first dowel 212 towards the second dowel 222 in the direction of the arrow 240, and the second dowel 222 towards the first dowel 212 in the direction of the arrow 250. In this way, the two parts 210, 220 can be non-permanently fastened together. A sufficient tightening load can be generated through tension in both the first dowel 212 and the second dowel 222. More than two parts with fixing elements (or dowels) could be joined together using a tightening element similar to the tightening element 200 shown in Fig.2 by providing more engagement slots, i.e. one engagement slot per dowel to be fastened.

In order to generate still greater clamping force, a greater torque is required to rotate the engagement slot(s). This applies both to the conventional tightening element 100 of Fig. 1 and to the tightening element 200 with two engagement slots 201, 202 of the present invention shown in Fig. 2. Any increased clamping force may also require a larger rotational frictional force to be overcome, thus requiring greater torque to turn the engagement slot or slots.

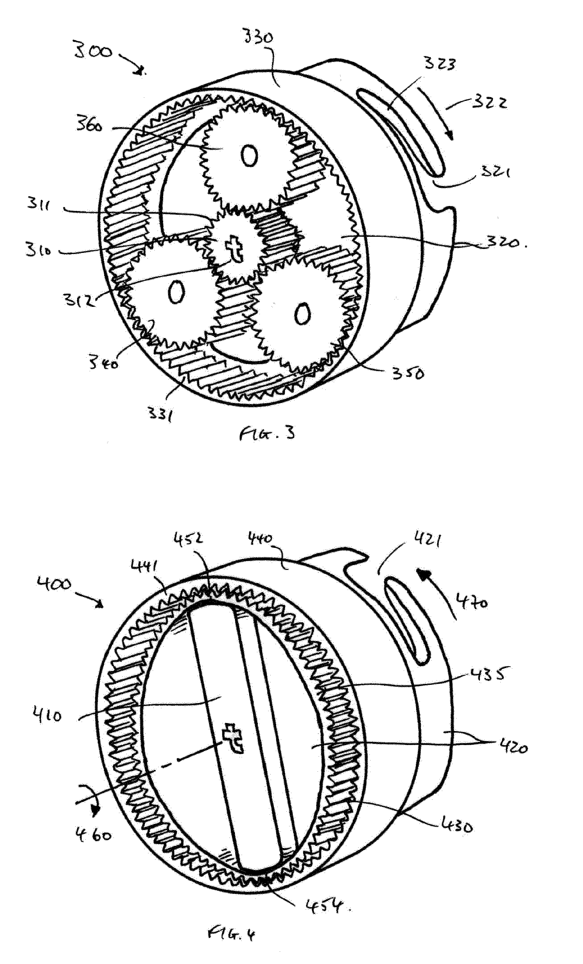

The embodiments of the invention shown in Figs. 3, 4, 5, 6, and 7 incorporate a gearing system into the fastening device. This enables input torque provided by the uses to be amplified to generate greater torque at the body (or bodies) in which the engagement slot(s) are formed. As such, step-down gearing may be used, meaning that that the rotation rate at the input to the gear mechanism is greater than the rotation rate at the engagment slot or slots.

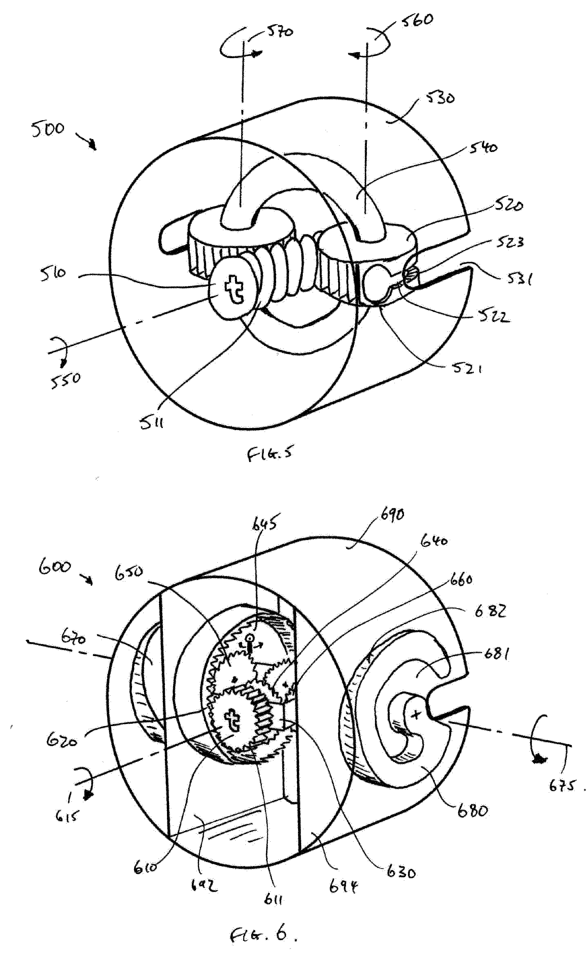

Any suitable gear mechanism could be used. For example any suitable gear mechanism that is able to fulfil this torque-increase/rotation-decrease between input (from the user) and output (at the engagement slot(s)) may be used. Examples of suitable gear mechanisms include: an epicyclic/planetary gearing system and derivatives (shown in Fig. 3); a harmonic-drive gear mechanism (shown in Fig. 4); a worm-drive gear mechanism (shown in Fig. 5); and a differential gear mechanism (shown in Fig. 6). These example gear mechanisms (which, it is emphasised, do not form an exhaustive list of possible gear mechanisms) are discussed below.

Each of the embodiments shown in Figs. 3 to 7 could be used either with a single fixing element (or dowel) or with multiple fixing elements (or dowels). Thus, each of the embodiments shown in Figs. 3 to 7 could have one engagement slot, two engagement slots, three engagement slots, four engagement slots, or more than four engagement slots. The number of engagement slots could be equal to or greater than the number of fixing elements with which the fastening device is intended to be used. For example, a fastening device with four engagement slots could be used two fasten two parts (with one fixing element each) together. This would give greater flexibility for locating the fastening device, because the fixing elements could engage with any of the engagement slots.

In embodiments configured for operation with a single fixing element, the fastening device may, in use, be inserted into a void in the part without affixing element (or dowel). The fastening device (or at least the operational parts of the fastening device, such as the rotatable engagement body (or bodies) and the engagement slot(s)) may then be rotated within the void to pull the fixing element towards the void, thereby securing the two parts together. This is similar to the operation of the conventional fastening device 100 explained above in relation to Figs. 1A and 1B.

An embodiment of fastening device 300 using an epicyclic gear mechanism is shown in Fig. 3. This epicyclic gear mechanism of Fig. 3 has a rotatable input shaft 310 which has teeth 311 formed on an outer surface so as to form a sun gear 310. The sun gear 310 is rotatably mounted on a rotatable body 320 which has one or more engagement slots 321 formed therein. The rotatable body 320 is designed to rotate within a housing 330, and may be referred to as a rotatable engagement body. The rotatable body 320 also has one or more planet gears rotatably mounted on it. The embodiment of Fig. 3 has three planet gears 340, 350, 360.

The housing 330 does not rotate within the void (or recess) formed by the parts being fastened together. The housing 330 has teeth 331 formed on an inner cylindrical surface thereof (the shape of the outer surface of the housing 330 is shown in Fig. 3 as being cylindrical, but any outer surface shape, such as square or triangular, could be used). Thus, the housing 330 forms a stationary (or non-rotating) ring gear.

In use, the input shaft 310 is rotated by a user using a tool that can be inserted into the keyed portion 312 (a suitable tool is described later). The teeth 311 of the input shaft 310 engage with the teeth of the planet gears 340, 350, 360, and the teeth of the planet gears 340, 350, 360 also engage with the teeth 331 of the housing. Because the housing 330 is rotationally fixed (for example through friction or by virtue of the shape of it's outer surface), the planet gears 340, 350, 360 rotate about the axis of the rotatable body 320 on which they are mounted. Thus, the engagement slot(s) 321 rotate, as shown by arrow 322.

In the embodiment of Fig. 3, the engagement slot(s) 321 have a cam profile 323 on the sidewall of the slot 321. The engagement slot(s) 321 are designed to engage with the neck portion of a dowel on a part being fastened together. As such, when the engagement slot(s) 321 rotate, the dowel is pulled inside the fastening device 300 by the cam profile 323 on the sidewall of the engagement slot(s) 321. Thus, the part to which the dowel is attached is drawn towards the fastening device 300 and/or towards the part to which it is being fastened.

Because of the use of sun and planet gears in a non-rotating ring gear described above, the rotation rate of the input shaft 310 is higher than the rotation rate of the engagement body 320 (and thus the engagement slot(s) 321). This allows greater torque (and thus greater clamping force) to be applied to the engagement slot(s) 321 than without the gear mechanism.

An embodiment of fastening device 400 using a harmonic drive gear mechanism is shown in Fig. 4. In the harmonic drive gear mechanism shown in Fig. 4, the rotatable input shaft 410 is also mounted on a rotatable engagement body 420. One or more engagement slots 421 are formed in the rotatable engagement body 420. The engagement slot or slots 421 of the embodiment shown in Fig. 4 may take the same (or similar) form as the engagement slot or slots 321 shown in the embodiment of Fig. 3, and therefore will not be described in greater detail here. The engagement body 420 of Fig. 4 takes a substantially cylindrical form. The engagement body 420 has teeth 430 formed over a portion of its outer cylindrical surface. In the embodiment shown in Fig. 4, the portion of the outer cylindrical surface of the engagement body 420 over which the teeth 430 are formed extends around the circumference of the engagement body 420, thereby forming a cog with teeth over the full circumference. The portion of the rotatable engagement body 420 over which the teeth 430 are formed is flexible in the embodiment shown in Fig. 4. This may be achieved, for example, by using a different material for the portion of the rotatable engagement body 420 on which the teeth 430 are formed, and/or by using a thinner wall thickness in this portion. Thus, the portion of the housing 420 that is flexible and has teeth 430 formed on an outer surface thereof may be referred to as the flexible spline 435 of the harmonic drive gear mechanism.

The rotatable input shaft 410 of the embodiment shown in Fig. 4 is an elongate body that takes the form of a bar-type wave-generator 410. The bar-type wave-generator 410 acts on the inner cylindrical surface of the rotatable engagement body 420 over the portion of the rotatable engagement body 420 on which the teeth 430 are formed.

The fastening device of the embodiment shown in Fig. 4 also has a housing 440 that is arranged to vacate the fastening device into a recess, which may be formed by one or more of the bodies being fastened together. The housing 440 is designed to be rotationally fixed in position relative to the first body and the second body that are being fastened together, for example through friction or due to the shape of its outer surface. The housing 440 has teeth 441 formed on an inner cylindrical surface thereof

At the positions 452, 454 where the bar-type wave-generator input shaft 410 acts on the flexible spine 435, the teeth 430 of the flexible spline 435 engage the teeth 441 of the fixed housing 440. As the bar-type wave-generator input shaft 410 is rotated in a particular direction, the teeth 430 of the flexible spline 435 that engage teeth 441 of the housing 440 change, according to the circumferential position of the points 452, 454 at which the input shaft 410 engages the inner surface of the flexible spline 435. The number of teeth 430 on the flexible spline 435 is set to be less than the number of teeth 441 on the housing 440. This means that as the input shaft 410 is rotated in a particular direction 460, the flexible spline 435, and thus the housing 420 and the engagement slot(s) 421 rotate in the opposite direction 470. The rotation rate of the flexible spline 435, and the housing 420 and engagement slot(s) 421 to which it is attached is less than the rotational rate of the input shaft 410 (for example significantly less, typically at a ratio of around 100:1, depending on, for example, the ratio of the number of teeth 430 of the flexible spline 435 to the number of teeth 441 of the housing 440).

It will be appreciated that the degree of flex shown in the flexi-spline 435 of Fig. 4 may be significantly exaggerated. In reality, very little flex of the flexi-spline would be required in order for the harmonic drive gear mechanism to function. This may be important because, as described above, the flexi-spline 435 may be part of the rotatable engagement body 420 that also acts as the load-bearing body by virtue of engagement of the fixing element(s) with the engagement slot(s) 421.

An embodiment of fastening device 500 using a worm drive gear mechanism is shown in Fig. 5. In the embodiment shown in Fig. 5, the rotatable input shaft 510 has a screw thread 511 formed on an outer cylindrical surface. The input shaft 510 therefore forms the worm of the worm drive gear mechanism and is rotatable about an axis 550.

In the embodiment of Fig. 5, each engagement slot 522 is formed in a separate rotatable engagement body 520 to any of the other engagement slots. Each rotatable engagement body 520 of the embodiment shown in Fig. 5 has a cylindrical outer surface. A portion of the cylindrical outer surface has teeth 521 formed thereon, these teeth 521 being configured to engage with the teeth 511 of the worm input shaft 510. As shown in Fig. 5, the teeth 521 are only formed over a particular sector of the rotatable engagement body 520. Thus, the teeth 521 do not extend around the entire circumference of the cylindrical outer surface of the rotatable engagement body 520. In a portion of the cylindrical outer surface that does not have the teeth 521, an engagement slot 522 is formed. This engagement slot 522 is configured to engage with a fixing element of one of the parts to be fastened together. The engagement slot 522 operates in a similar manner to the engagement slot 321 described above in relation to the embodiment of Fig. 3, albeit rotating about a different axis 560. Thus, the engagement slot 522 has a cam-profile in its side wall (when viewed along the axis of rotation 560 of the rotatable engagement body 520). The cam profile 523 acts to pull the fixing element (or dowel) inside the fastening device 500 when it is rotated about its axis 560.

As can be clearly shown in Fig. 5, in operation, a user may rotate the worm input shaft 510 about an axis 550. This causes the rotatable engagement bodies 520 to rotate about their respective axes 560, 570. Thus, the rotatable engagement bodies 520 act as worm wheels. Due to the action of the worm drive gear mechanism, the rotation of the worm wheels, and thus the rotation of the slots 522 is about axes 560, 570 that are perpendicular to the axis 550 of rotation of the input shaft 510. As shown in Fig. 5, the rotatable engagement bodies 520 are caused to rotate in opposite directions about their respective axes 560, 570, thereby pulling the fixing elements (or dowels) in their respective engagement slots 522 towards each other, and thus fastening the two parts to which the dowels are attached together.

In the embodiment of Fig. 5, the two rotatable engagement bodies 520 are mounted on an inner core 540. This inner core 540 is configured to withstand the force generated when the rotatable engagement bodies 520 are rotated and the fixing elements to which they are engaged are pulled together as a result. The embodiment of Fig. 5 also has an outer housing 530 that is configured to be fixed in position in a recess formed in one or more of the bodies being fastened together. The inner core 540 may be mounted to the housing 530. The housing 530 has one or more slots 531 formed therein. The slot or slots 531 are configured to allow a fixing element (or dowel) to pass therethrough and into the engagement slot 521 of the rotatable engagement body 520. One slot 531 is therefore required for each rotatable engagement body 520 of the worm drive gear mechanism. Thus, in the embodiment shown in Fig. 5, the housing 530 may simply act to locate and/or fix the fastening device 500 in position, and allow the fixing element to engage with the engagement slots 522.

An embodiment of fastening device 600 using a differential device gear mechanism is shown in Fig. 6. In the differential drive gear mechanism of Fig. 6, the input shaft 610 has teeth 611 formed on an outer cylindrical surface thereof to form a drive gear 610. This input drive gear 610 engages with a ring gear 620 which is mounted on a differential carrier 630. Thus, when the input drive gear 610 is rotated by a user, the ring gear 620, together with the differential carrier 630 rotates about an axis that is perpendicular to the axis of rotation of the input drive gear 610. The differential carrier 630 has a differential planet gear 640 mounted thereon. This differential planet gear 640 is arranged to engage with a first output gear 650 and a second output gear 660 in the embodiment shown in Fig. 6. In turn, the first output gear 650 is connected (for example rigidly connected) to a first engagement body 670, and the second output gear is connected to (for example rigidly connected to) a second rotatable engagement body 680. The first and second rotatable engagement bodies 670, 680 have formed therein an engagement slot (the engagement slot 681 of the second rotatable engagement body 680 is shown in Fig. 6). In this way, the rotation of the input drive gear 610 about the axis 615 results in rotation of the first and second rotatable engagement bodies 670, 680, and the associated engagement slots 681 about a perpendicular axis 675.

The differential drive gearing mechanism of the fastening device 600 shown in Fig. 6 thus works as a conventional differential. As such, if one of the rotatable engagement bodies 670, 680 experiences greater resistance to rotation than the other rotatable engagement body, then more torque is transferred to the rotatable engagement body that experiences the lower resistance to rotation. This ensures that the tightening force provided to the fixing elements that engage with the engagement slots 681 is equal between the rotating engagement bodies 670, 680, and thus the tightening is distributed evenly across the fixing elements (or dowels).

It will be noted that the slots 681 of the engagement bodies 670, 680 also have a cam profile 682 that is configured to pull the fixing elements (or dowels) into the fastening device 600 (or towards each other) when the rotatable engagement bodies 670, 680 are rotated. Thus, the engagement slots 681 acts in a similar manner to those of the embodiments shown in Figs. 3-5.

In the embodiment of Fig. 6, the differential drive gear mechanism is mounted in a housing 690. The housing 690 is configured to locate, and fix, the fastening device 600 in a recess formed in one or more of the parts being fastened together. The housing 690 may comprise mounting elements 692, 694 on which the various parts of the differential drive gear mechanism can be mounted. The housing 690 is configured to resist rotation in the recess in which it sits, for example through friction or by virtue of its shape.

A simple ratchet attachment could be added to provide the user with feedback. The ratchet may operate between the ring gear 620 and any one or more of the differential plant gear 640, the first output gear 650, and the second output gear 660. In Fig. 6, the ratchet 645 is shown as a simple pivotable member 645 acting on the first output gear 650 to provide audible feedback when the differential mechanism is actually in action, performing its 'torque-equalising' function- i.e. when the differential planet gear 640 was rotating about its axis to equalise the overall rotational resistance between the engagement bodies 670, 680. This would only typically happen near the end of the tightening procedure as the loads increased, and would provide audible feedback that the tightening process was nearly complete. The ratchet would also act to lock (and hence prevent) the differential unit operating during the removal of the device as the unscrewing motion requires no such differential function (indeed without such a ratchet function, the differential might actually prevent the overall device successfully unscrewing, as one cam could become fully loose, entirely inhibiting the other from doing so).

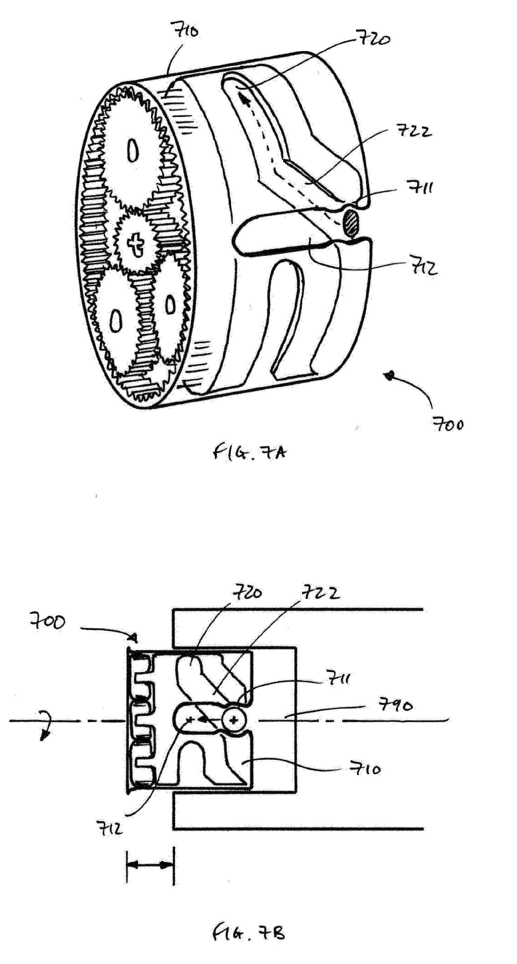

To aid the function of shelf construction, the fastening device may be configured to pull itself into the recess in which it sits as it is tightening. A mechanism for achieving this feature is shown in Figs. 7A and 7B. This feature may be particularly applicable to embodiments in which the engagement slots rotate about a parallel (or collinear) axis as the input shaft, for example the embodiments of Figs. 3 and 4.

As shown in Fig. 7B, when the fastening device 700 (which may represent a modified version of the fastening device 300 of Fig. 3 or the fastening device 400 of Fig. 4) is initially placed in position, it may be 'clicked' into an initial locating position as the fixing element engages a detent 711 in the housing 710. At this stage, negligible clamping force is provided, although there may be sufficient clamping force for the structure to hold its form. To make it clear to the user that the system is not structurally secure, the fastening device 700 may remain proud of the parts being fastened together at this stage, as shown clearly in Fig. 7B.

By arranging the engagement slots 720 (which may be, for example, the engagement slots 321 of the Fig. 3 embodiment or 421 of the Fig. 4 embodiment) to extend in the axial direction of the fastening device 700 as well as in the circumferential direction, they operate to pull the fastening device 700 into the recess 790 as the input shaft (and thus the engagement slot(s)) is rotated. In the example of Fig. 7, a portion 722 of the engagement slot 720 extends in the axial direction, as well as in the circumferential direction. In this regard, the "axial direction" could mean the direction of the axis of the fastening device and/or the rotatable engagement body and/or the engagement slot(s). The housing 710 (which may have teeth on an inner circumferential surface to form a ring gear of an epicyclic gear mechanism or the circular spline of a harmonic drive gear mechanism) has a slot 712 extending in the axial direction in the embodiment of Figs. 7A and 7B. The fixing element or dowel moves along this slot 712 as it passes along the engagement slot 720.

Thus the slots 720 extending at least partially in the axial direction could be said to perform a "cork-screw" function to pull the fastening device 700 into the recess 790. At the same time, the cam profile (shown in detail as feature 323 on the Fig. 3 embodiment, but applicable to all embodiments) also performs its function of providing the force to fasten the parts together. This "cork-screw" function provides feedback that may assist the user to know which fastening devices 700 have been tightened at a glance. Those fastening devices 700 that have not been fastened would stand proud of the surface(s) in which the recess 790 is formed. A further advantage of this feature is that when the parts are being loosened for disassembly, and thus the fastening devices are being removed, they will present themselves for removal as they are unscrewed by standing clear of the surface(s) in which the recess 790 is formed. This "cork-screw" function may be further arranged such that the fastening device could protrude a set amount when it is unscrewed to the point that the fixing element engages the detent 711. Further unscrewing of the fastening device could cause it to move past this position, such that more of the fastening device protrudes from the surface(s).

The fastening device as a whole may be configured to give a high-level of user feedback, for example visual feedback. As such, the housing of the embodiments shown in Figs. 3-7 may be transparent. This enables the user to view the operation of the various gear mechanisms, for example the progress of the rotational motion of the rotatable engagement body or bodies. When tightened, the fastening device may therefore form a critical structural and visual part of the shelving system. To this end, the user may create the core mechanism from its component parts, i. e. they may have complete freedom over the colour combinations of the core in line with the shelf design/colours and their desired room colour scheme.

The present invention also provides a tightening tool for tightening a tightenable element. The tightening tool could be used to tighten any tightenable element. For example, the tightening tool could be used to tighten any one of the fastening devices described herein. For this purpose, the tightening tool of the present invention may comprise a keyed portion for engaging with a keyed portion on the input shaft of any one of the fastening devices described herein.

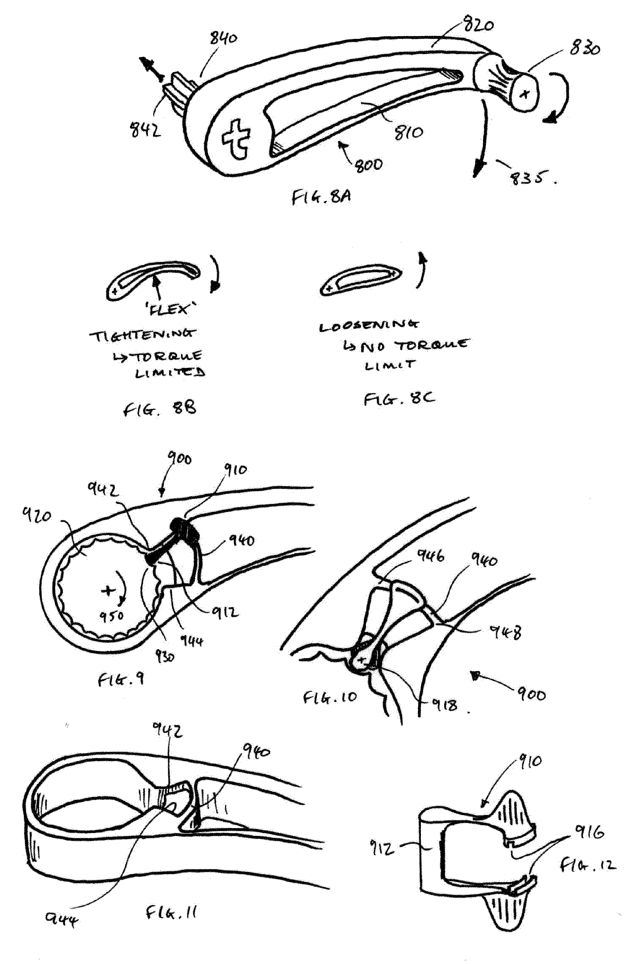

An embodiment of a tightening tool 800 according to the present invention is shown in Figs. 8A-8C. The tightening tool 800 acts as a torque wrench to limit the amount of tightening torque that can be provided to the element that it is being used to tighten. The tightening tool 800 has a first arm 810 and a second arm 820. When an input tightening torque is applied to an input handle 830 in the direction 835, this input torque is transferred to a head portion 840 via the arms 810, 820. The head portion 840 has a keyed portion 842 (which may be a non-standard keyed portion) for engaging with the element to be tightened, to thereby transfer input torque from the input handle 830 to the element being tightened.

Up to a certain torque, the whole tightening tool 800 remains substantially rigid, with little or no flexing of any element occurring. However, when the torque exceeds a predetermined level, the first arm 810 undergoes significant flexing. This is shown in the schematic of Fig. 8B. This significant flexing prevents further increased torque being transmitted to the head portion 840, and/or provides a visible and/or audible and/or tactile indication to the user that the desired tightening torque has been reached. The buckling/flexing of the first arm 810 above the predetermined load may be reversible, such that when the input torque is decreased back below the buckling threshold, the arm 810 and the tightening tool 800 return to their undeformed shape.

Any suitable construction/arrangement could be used to ensure that the first arm 810 buckles when the input torque exceeds a predetermined threshold. For example, the thickness of the first arm 810 could be such that it is caused to buckle and/or it could be provided with a notch at the point at which it is intended to buckle and/or it could be constructed from a material that is weaker (in buckling) than the rest of the tightening tool 800. Alternatively or additionally, the shape of the first arm 800 and/or the second arm 820 might cause the first arm 810 to buckle at the predetermined torque. In the example shown in Figs. 8A-8C, the first arm 810 is a curved elongate element that has its centre of curvature in the direction in which it moves during tightening. This structure leads to the desired buckling when the input torque exceeds the predetermined limit.

As shown in Fig. 8C, the construction of the tightening tool 800 can be such that when the tool is used for loosening, there is no such torque limit. One way of ensuring this is to have the first arm 800 (and optionally the second arm) as a curved elongate element that has its centre of curvature away from the direction in which it moves during loosening.

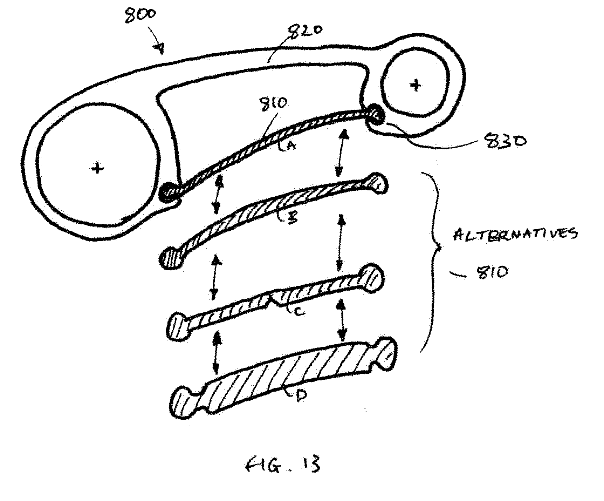

In Figures 8A-8C, the first arm 810 of the tightening tool 800 is shown as being integral to the rest of the tightening tool 800. However, alternatively, the first arm 810 may be interchangeable. As such, the first arm 810 may be removable from the rest of the tightening tool. Such an arrangement is shown in Figure 13. In such an arrangement, the first arm 810A may be replaced with a different first arm 810, e.g 810B, 810C and 810D. The different first arm 810 may be configured to buckle when the input torque exceeds a different limit to the input torque at which the original (or baseline) first arm 810 buckles. Accordingly, the tightening tool 800 may be provided as a kit comprising two or more replaceable first arms 810, each of which is configured to buckle at a different torque input to the others. This may allow the tightening tool 800 to act as a torque wrench to limit the tightening torque to different levels depending on, for example, the element that is being tightened and/or the application that the element is being used for/in. It will be appreciated that different first arms 810 may be provided separately from the rest of the tightening tool 800. Thus, the first arm 810 may be said to be separable from the second arm 820.

All of the features/properties of the tightening tool 800 and/or the components thereof may apply to all embodiments, for example the embodiment of Figures 8A-8C and the embodiment of Figure 13. Thus, for example, replaceable first arms 810 may be configured to buckle at different input torques in any suitable way, for example by using different geometry and/or construction and/or materials.

The interchangeable first arm 810 shown in Figure 13 may be removable from and replaceable in the rest of the tightening tool 800 in any suitable manner. For example, a replaceable first arm 810 may be held in position via an interference-fit planar ball and socket joint arrangement 830. The tolerance of this joint arrangement may be such that the first arm 810 is held tightly in position when loaded in the longitudinal direction (i.e. in normal use) but can be easily removed by the user when desired, by loading the joint transversally in the direction of the joint axis. Such an arrangement of interchangeable first arm 810 may not need additional fixing elements to hold it within the geometry of the rest of the tool 800. In this way, the device 810 may be designed such that the first arm portion can be removed from the tool, and replaced with, for example, other geometries and materials to provide an alternative buckling torque response. However, any other suitable arrangement could be used for an interchangeable first arm 810.

Figs. 9-12 show a ratchet 900 according to the present invention. The ratchet 900 could be used with the tightening tool 800 of Fig. 8, for example. The ratchet 900 has a pawl 910 that has a pointer 912 that is shaped to cooperate with a toothed ratchet cog 920 at a point of engagement 930. This allows torque to be transmitted from the pawl 900 to the head in which the toothed cog is located. The pointer 912 can take any appropriate shape, for example it may comprise a cylindrical surface.

The pawl 910 is shown in more detail in Fig. 12. As well as the pointer 912, the pawl 900 also has one or more flexible arms 914 and one or more sliders 916. The slider 916 is designed to run along rails 940 on the tightening tool with which it is used, as shown in Figs. 9, 10, and 11. The flexible arm 914 joins the pointer 912 to the slider 916. As shown in Fig.12, the pawl 900 can be formed as a single component.

When the slider 916 is at one end 946 of the rail 940, it allows the tool to be used for tightening, but does not permit loosening. This is shown in Fig. 9. If the tool with the slider in the position of Fig. 9 is used for tightening, in the direction of arrow 950, the flexible arm 914 would be pinned against the side wall 942 of a recess in the tool, and would therefore undergo no further flexing. This allows tightening torque to be transmitted to the head of the tool through the flexible arm 914 via the point of contact 930 of the pointer 912 with the toothed cog 920.

On the other hand, if the tool in the configuration of Fig. 9 were to be used to try to loosen an element (i.e. rotated in the direction opposite to arrow 950), the flexible arm 914 would flex away from the wall 942 of the recess, and thus the toothed ratchet 920 would spin past the pointer 912 without any useful torque being transmitted between the two.

If the slider 916 were to be moved to the other side 948 of the rail 940, the opposite would be true, i.e. the flexible arm would engage the opposite wall 944 of the recess to permit loosening, but would flex, and thus transmit no useful torque, if the tool were to be used in the tightening direction.

The ratchet 900 could be configured such that when the slider 916 is positioned in the centre of the rail 940, both tightening and loosening is permitted (by arranging the geometry such that the pointer 912 engages with the toothed cog 920 in either rotational direction). Alternatively, the ratchet 900 could be configured such that when the slider 916 is positioned in the centre of the rail 940, neither tightening nor loosening is permitted (by arranging the flexible arm 914 to flex such that the pointer 912 cannot engage with the teeth of the toothed cog 920 in either rotational direction).

The ratchet may be configured such that the rail 940 is curved such that when the pawl 910 is moved along it, it rotates about a position 918 that coincides with the pointer 912. This can ensure that the pointer position relative to the toothed cog 920 is maintained regardless of the position of the slider 916 on the rail 940, thereby ensuring smooth and reliable operation.

It will be appreciated that any aspect of the invention described herein may be combined with any other compatible aspect. By way of non-limitative example, any ratchet described herein could be incorporated into any tightening tool described herein, and any tightening tool described herein could be used with any fastening device described herein. Moreover, any feature of the described embodiments could be incorporated into any other compatible embodiment.

## Claims

1. A fastening device for fastening a first body having a first fixing element to a second body, the fastening device comprising:
a rotatable input shaft;
a primary rotatable engagement body having a primary engagement slot configured to engage with said first fixing element, the primary engagement slot being formed in a wall of the primary rotatable engagement body such that the primary engagement slot rotates with the primary rotatable engagement body; and
a gear mechanism configured to transfer rotation from the rotatable input shaft to the primary rotatable engagement body such that the rotation rate of the primary rotatable engagement body is lower than the rotation rate of the rotatable input shaft, wherein:
the primary engagement slot is shaped so as to pull the first fixing element towards the second body as the primary engagement slot rotates, thereby fastening the first body to the second body.

2. A fastening device according to claim 1, wherein:
the thickness of the wall of the primary rotatable engagement body in which the primary engagement slot is formed increases along at least a part of the length of the slot in the direction in which the slot is configured to rotate, so as to pull said first fixing element towards the second body as it rotates, and wherein:
optionally the slot follows an arcuate path when viewed in the direction of the axis about which it is configured to rotate; and/or
optionally the slot is configured to receive the neck portion of an elongate fixing element that has a head portion at its distal end and a neck portion that is narrower than the head portion, such that when the fixing element is received in the slot, the head portion extends on the opposite side of the slot to the rest of the fixing element; and/or
optionally the fastening device further comprises a further engagement slot, the further engagement slot having substantially the same form as said primary engagement slot and being configured to engage with a second fixing element on said second body in substantially the same way that the primary engagement slot engages with the first fixing element on said first body, the further engagement slot optionally being shaped so as to pull the second fixing element towards the first body as the further engagement slot rotates, and/or optionally being formed in the primary rotatable engagement body.

3. A fastening device according to claim 1 or claim 2, wherein:
the axis about which the rotatable input shaft rotates is parallel to the axis about which the primary rotatable engagement body rotates and/or
the axis about which the rotatable input shaft rotates is collinear with the axis about which the primary rotatable engagement body rotates.

4. A fastening device according to any one of the preceding claims, wherein either:
a) the gear mechanism is an epicyclic gear mechanism, and the fastening device further comprises:
a housing arranged to locate the fastening device into a recess formed in the first body and the second body and to fix the housing in position relative to the first body and the second body, wherein:
the rotatable input shaft is rotatably mounted on the primary rotatable engagement body and takes the form a sun gear having teeth on an outer cylindrical surface;
at least one planet gear is also rotatably mounted on the primary rotatable engagement body such that its teeth engage with the teeth of the rotatable input shaft; and
the housing forms a ring gear having teeth on an inner cylindrical surface configured to engage with the teeth of the planet gear such that when the input shaft is rotated, the axis of the planet gear rotates about the axis of the input shaft, thereby causing the primary rotatable engagement body to rotate about its axis;
or
b) the gear mechanism is a harmonic drive gear mechanism, and the fastening device further comprises:
a housing arranged to locate the fastening device into a recess formed in the first body and the second body and to fix the housing in position relative to the first body and the second body, wherein:
the housing forms a circular spline having teeth on an inner cylindrical surface;
the primary rotatable engagement body comprises a flexible spline having teeth formed on an outer cylindrical surface to form a flex-spline configured to engage with the circular spline formed by the housing; and
the rotatable input shaft is rotatably mounted on the primary rotatable engagement body and takes the form a bar-type wave-generator configured to act on an inner cylindrical surface of the flex-spline formed by the primary rotatable engagement body, such that when the input shaft is rotated, the flex spline and thus the primary rotatable engagement body rotate in the opposite direction to the input shaft.

5. A fastening device according to any one of the preceding claims, wherein at least a portion of the primary engagement slot and, where present, at least a portion of the secondary engagement slot extends in the direction of the axis of rotation of the primary rotatable engagement body such that, as the respective engagement slot rotates about its axis, the fastening device moves in the direction of the axis of rotation of the primary rotatable engagement body.

6. A fastening device according to any one of claims 2 to 5 comprising said further engagement slot, further comprising a further rotatable engagement body, wherein the further engagement slot is formed in the further rotatable engagement body, wherein, optionally:
the primary rotatable engagement body and the further rotatable engagement body are configured to rotate about parallel axes, and the rotatable input shaft is configured to rotate about an axis that is perpendicular to the axes about with the primary rotatable engagement body and the further rotatable engagement body are configured to rotate.

7. A fastening device according to claim 6, wherein:
a) the gear mechanism is a worm drive gear mechanism, in which:
the rotatable input shaft has a screw thread on an outer cylindrical surface to form a worm;
the primary rotatable engagement body and the further rotatable engagement body both comprise a cylindrical outer surface provided with teeth configured to engage with the teeth of the worm, thereby forming a pair of worm wheels; and
the primary and further engagement slots are formed on portions of the cylindrical outer surfaces of the primary and further rotatable engagement bodies respectively at different circumferential positions to the teeth; or
b) the gear mechanism is a differential drive gear mechanism, in which:
the rotatable input shaft has teeth formed on an outer cylindrical surface thereof to form a drive gear, and the fastening device further comprises:
a ring gear configured to engage with the teeth of the input shaft and to rotate about an axis that is perpendicular to the axis of rotation of the input shaft;
a differential carrier to which the ring gear is rigidly connected;
a differential planet gear rotatably mounted on the differential carrier;
a first output gear configured to engage with, and be driven by, the differential planet gear, the primary rotatable engagement body being configured to rotate with the first output gear; and
a second output gear configured to engage with, and be driven by, of the differential planet gear, the further rotatable engagement body being configured to rotate with the second output gear

8. A fastening device according to claim 7, further comprising:
a housing arranged to locate the fastening device into a recess formed in the first body and the second body and to fix the housing in position relative to the first body and the second body, wherein:
the housing comprises a first cutout portion configured to allow the first fixing element to pass through the housing to engage with the primary engagement slot and a second cutout portion configured to allow the second fixing element to pass through the housing to engage with the further engagement slot.

9. A fastening device for fastening a first body having a first fixing element to a second body having a second fixing element, the fastening device comprising:
a rotatable body having formed therein a first engagement slot configured to engage with said first fixing element and a second engagement slot configured to engage with said second fixing element, wherein:
the first engagement slot and the second engagement slot are shaped such that as the rotatable body is rotated, said first fixing element and said second fixing element are pulled towards each other, thereby fastening said first body to said second body, wherein, optionally:
the thickness of the wall of the rotatable body in which the first and second engagement slots are formed increases along at least a part of the length of each slot in the direction in which the slots are configured to rotate, so as to pull said first fixing element and said second fixing element towards each other, and/or optionally:
the first fixing element and the second fixing element are a first dowel and a second dowel respectively, each dowel having a head portion and a neck portion that is narrower than the head portion, and the first and second engagement slots are configured to receive the neck portion of the first and second dowels respectively.

10. A tightening tool for providing a torque to a tightenable element, the tightening tool comprising:
a head portion for engaging with the tightenable element;
a torque input portion configured to allow an input torque to be applied to the tightening tool;
a first arm extending between the head portion and the torque input portion; and
a second arm extending between the head portion and the torque input portion, wherein:
the first arm and the second arm are constructed and arranged such that, when the tightening tool is used for providing a tightening torque to the tightenable element, the first arm remains substantially rigid when the input torque is below a predetermined value, and undergoes significant flexing when the input torque exceeds said predetermined value.

11. A tightening tool according to claim 10, wherein:
the first arm is configured to buckle at a predetermined position along its length when said input torque exceeds said predetermined value, thereby undergoing said significant flexing; and/or
said first arm and said second arm are made from the same material, and said significant flexing of said first arm is caused by the relative construction of the first arm and the second arm; and/or
said first arm and said second arm are made from the same material, and said significant flexing of said first arm is caused by the relative geometry of the first arm and the second arm; and/or
said first arm has a thin wall portion at a position along its length, such that the first arm is configured to buckle at the thin wall portion when said input torque exceeds said predetermined value; and/or
said first arm is a curved elongate element, with the centre of curvature being on the side of the first arm that is in the direction of movement of the first arm when the tightening tool is used to provide a tightening torque to the tightenable element; and/or
said first arm and said second arm are non-parallel elongate elements that are joined together by the head portion at one end, and by the torque input portion at the other end; and/or
said first arm and said second arm are constructed and arranged such that when the tightening tool is used for providing a loosening torque to the tightenable element, the first arm and the second arm remain substantially rigid regardless of the loosening input torque; and/or
said tightening tool further comprises a keyed element on the head portion configured to engage with a corresponding keyed element on said tightenable element, so as to allow torque to be transferred from the tightening tool to the tightenable element, said keyed element optionally being a non-standard keyed element.

12. A tightening tool according to claim 10 or claim 11, wherein:
said head portion comprises a ratchet configured to be switchable between a first mode and a second mode;
in the first mode the ratchet allows a tightening torque to be transmitted from the tightening tool to said tightenable element, but prevents a loosening torque from being transmitted from the tightening tool to said tightenable element; and
in the second mode the ratchet allows a loosening torque to be transmitted from the tightening tool to said tightenable element, but prevents a tightening torque from being transmitted from the tightening tool to said tightenable element, and wherein, optionally:
said ratchet comprises:
a toothed ratchet cog; and
a pawl, the pawl comprising a configurable pointer that is able to provide a ratchet function in either direction of rotation by engaging with the teeth of the toothed ratchet cog to thereby transfer torque to the toothed ratchet cog, and wherein, further optionally:
said pawl further comprises a slider and a flexible arm, said flexible arm being arranged to join said pointer to said slider;
said head portion comprises a recess within which the pawl is located, and a guide rail on which the slider can run, said slider being configured to be located, in use, either at a first end of the guide rail or a second end of the guide rail; and
when the slider is located at the first end of the guide rail, the flexible arm is configured to abut a first side wall of the recess such that the pawl is not able to flex when the tightening tool is rotated in a tightening direction, but is able to flex when the tightening tool is rotated in a loosening direction, and when the slider is located at the second end of the guide rail, the flexible arm is configured to abut a second side wall of the recess such that the pawl is not able to flex when the tightening tool is rotated in a loosening direction, but is able to flex when the tightening tool is rotated in a tightening direction.

13. A tightening tool according to any one of claims 10 to 12, wherein said first arm is a baseline first arm configured to be removable from the rest of the tightening tool; and, optionally, the baseline first arm is configured to be replaceable with a replacement first arm that is configured to undergo significant flexing when the input torque exceeds a different predetermined value to the predetermined value at which the baseline first arm is configured to undergo significant flexing.

14. A kit of parts comprising a tightening tool according to any one of claims 10 to 13, wherein the first arm is a baseline first arm configured to be removable from the rest of the tightening tool, the kit of parts further comprising at least one further first arm configured to replace the baseline first arm in the tightening tool, wherein:
the or each further first arm is configured to undergo significant flexing when the input torque exceeds a different predetermined value to the predetermined value at which the other first arm or arms in the kit of parts is/are configured to undergo significant flexing.

15. A tightening tool according to any one of claims 10 to 14 configured to provide an input torque to the rotatable input shaft of the fastening device any one of claims 1 to 9.
